# EUROPEAN PATENT APPLICATION

(11) **EP 4 382 997 A1**
(43) Date of publication of application: **12.06.2024**
(21) Application number: 22306824.8
(22) Date of filing: 08.12.2022
(51) Int. Cl.: G02C 7/02, G02C 7/04

(54) **METHOD FOR DESIGNING A CONTACT LENS**

(71) Applicant: Essilor International, 94220 Charenton-Le-Pont (FR)
(72) Inventor: GIRAUDET, Guillaume, 45000 ORLEANS (FR); MARIN, Gildas, 75012 Paris (FR); FERMIGIER, Bruno, 94700 MAISONS ALFORT (FR); GUILLOT, Matthieu, 92130 ISSY LES MOULINEAUX (FR)
(74) Representative: Jacobacci Coralis Harle

(57) **Abstract**

Computer-implemented method for designing a contact lens, said method comprising:
- for a first zone of the contact lens, determining a value of at least one optical feature of at least one micro-optical element superimposed on the contact lens in the first zone based on a first comparison between a first optical function of the contact lens calculated throughout a first area of the contact lens and a first target optical function,
- for a second zone of the contact lens, determining a value of at least one optical feature of at least one micro-optical element superimposed on the contact lens in the second zone based on a second comparison between a second lens optical function of the contact lens calculated throughout a second area of the contact lens and a second target optical function, the second area being comprised in a union of the first zone and the second zone.

## Description

### TECHNICAL FIELD OF THE INVENTION

The invention relates to a method for designing a contact lens.

### BACKGROUND INFORMATION AND PRIOR ART

Myopia of an eye is characterized by the fact that the eye focuses light coming from far distance of the eye in front of the retina. In other words, a myopic eye presents a length that is too important for clear far vision. Myopia has both genetic and environmental origins. In the latter case, it develops due to the increase in near vision tasks and to less outdoor activities.

Many solutions exist that aim at alleviating the discomfort induced by myopia and/or controlling myopia evolution. It is known in particular to use an ophthalmic lens intended to be worn in front of an eye of a wearer and having an optic zone comprising an arrangement of micro-optical elements having optical features adapted to alleviate the discomfort induced by myopia and/or to provide myopia control function in order to manage myopia progression. These solutions may be functional, but they do not consider, in the design process, the influence of the light environment on the variations of the size of the pupil of the wearer, particularly when the wearer performs indoor or outdoor activities. Consequently, the design of those lenses is not well adapted to variations of the light environment when applied to contact lenses. The non-consideration of the light environment during the design process of those contact lenses could alter the visual acuity of the wearer wearing those contact lenses.

### SUMMARY OF THE INVENTION

In this context, one object of the invention is to provide a method for designing a corrective contact lens with a better tradeoff for the wearer between visual acuity and visual discomfort due to the optical features realizing the myopia evolution control.

The above objects are achieved according to the invention by providing a computer-implemented method for designing a contact lens, said computer-implemented method comprising:
- for a first zone of the contact lens, determining a value of at least one optical feature of at least one micro-optical element superimposed on the contact lens in the first zone, based on a first comparison, the first comparison being between a first optical function representative of the optical quality of the contact lens calculated throughout a first area of the contact lens and a first target optical function, the first area being comprised in the first zone and comprising the at least one micro-optical element of the first zone,
- for a second zone of the contact lens, determining a value of at least one optical feature of at least one micro-optical element superimposed on the contact lens in the second zone, based on a second comparison, the second comparison being between a second optical function representative of the optical quality of the contact lens calculated throughout a second area of the contact lens and a second target optical function, the second area being comprised in a union of the first zone and the second zone and comprising the at least one micro-optical-element of the second zone.

Thanks to the use of specific areas and calculations on these areas, the method allows to take into account the variation in the pupil size induced by change in the light environment during the design process of the contact lens. The contact lens obtained with the method is well adapted to variations of the light environment and thus presents a better tradeoff for the wearer between visual acuity and myopia control efficacy for example referring to a visual discomfort due to the micro-optical elements realizing the control of the evolution of the myopia.

Consequently, the method provides a contact lens having an optical lens design determined by considering the variation of the pupil diameter.

According to an embodiment, the second zone is arranged around the first zone.

According to an embodiment, determining the value of the at least one optical feature of the at least one micro-optical element of the first zone is carried out before determining the value of the at least one optical feature of the at least one micro-optical element of the second zone.

According to the last embodiment, the method further comprises:
- for a third zone of the contact lens arranged annularly to surround the second zone, determining a value of at least one optical feature of at least one micro-optical element superimposed on the contact lens in the third zone based on a third comparison, the third comparison being between a third optical function of the contact lens calculated throughout a third area of the contact lens and a third target optical function, the third area being comprised in a union of the first, second and third zones and comprising the at least one micro-optical element of the third zone.

Determining the value of the at least one optical feature of the at least one micro-optical element of the third zone is carried out after determining the value of the at least one optical feature of the at least one micro-optical element of the second zone.

Advantageously, the first zone of the contact lens, the second zone of the contact lens and the third zone of the contact lens are concentric.

According to an embodiment, the first optical function, the second optical function, the first target optical function and/or the second target optical function are based on a Modulation Transfer Function or a Point Spread Function.

According to an embodiment, the first target optical function and the second target optical function are identical.

According to an embodiment, the first target optical function and the second target optical function are different.

According to an embodiment, the first optical function and/or the second optical function are calculated for spatial frequencies comprised between 1 and 5 cycles per degree, and/or between 5 and 20 cycles per degree and/or between 20 and 30 cycles per degree.

According to an embodiment, the at least one optical feature of the at least one micro-optical element of the first zone and the at least one optical feature of the at least one micro-optical element of the second zone comprise at least one of the following:
- a dioptric power;
- a geometry;
- a refractive, a diffractive or a diffusive optical function;
- a focal length;
- a diameter;
- a position.

Advantageously, the at least one micro-optical element of the first zone having a circular contour, a diameter of the at least one micro-optical element of the first zone is between 0,3 millimeter to 2 millimeters and/or, the at least one micro-optical element of the second zone having a circular contour, a diameter of the at least one micro-optical element of the second zone is between 0,3 millimeter to 2 millimeters.

Advantageously, a dioptric power of the at least one micro-optical element of the first zone is between 1 diopter to 10 diopters and/or a dioptric power of the at least one micro-optical element of the second zone is between 1 diopter to 10.

According to an embodiment, the first zone comprises a plurality of micro-optical elements and the at least one optical feature of the first zone comprises a density of the micro-optical elements over the first zone or a number of the micro-optical elements in the first zone and/or,
the second zone comprises a plurality of micro-optical elements and the at least one optical feature of the first zone comprises a density of the micro-optical elements over the second zone or a number of the micro-optical elements in the second zone.

According to an embodiment, the first zone comprises at least one sub-zone free of any micro-optical element, the at least one sub-zone of the first zone covering at least 10 percent of the first zone and/or the second zone comprises at least one sub-zone free of any micro-optical element, the at least one sub-zone of the second zone covering at least 10 percent of the second zone.

According to an embodiment, determining the value of the at least one optical feature of the at least one micro-optical element of the first and second zones comprise each an iterative optimization process comprising:
- modifying the at least one optical feature of the at least one micro-optical element,
- checking if the given comparison satisfies a criterion,
- if the criterion is not satisfied, reiterating modifying and checking.

According to an embodiment, the criterion is at least one of the following:
- a minimum of a quadratic deviation between the first optical function and the first target function,
- a minimum of a quadratic deviation between the second optical function and the second target function,
- a minimum of a specific cost function,
- a range of values of the first and second target optical functions,
- threshold value.

Typically, the iterative optimization process comprises a stop criterion corresponding to a number of iterations in addition to the criterion, said stop criterion being configured to stop the iterative optimization process when a current iteration reaches the number of iterations.

According to an embodiment, the method comprises a preliminary step of defining a macro-optical design of the contact lens providing a macro-optical function having at least a spherical refractive power.

### DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:
- Figure 1 shows an example of a contact lens according to the present disclosure placed on the wearer's eye.
- Figure 2 shows a schematic axial cut view of a contact lens according to the present disclosure;
- Figure 3 shows a front view of a first example of a contact lens according to the present disclosure, when projected into a facial plane perpendicular to the main axis of the contact lens;
- Figure 4 shows a schematic front view of a second example of a contact lens according to the present disclosure, when projected into a facial plane perpendicular to the main axis of the contact lens;
- Figure 5 shows a schematic front view of an example of an arrangement of micro-optical elements in the second zone of the third example of the contact lens illustrated on figure 4;
- Figure 6 shows a schematic front view of another example of an arrangement of micro-optical elements in the second zone of the third example of the contact lens illustrated on figure 4;
- Figure 7 shows a schematic front view of a third example of a contact lens according to the present disclosure, when projected into a facial plane perpendicular to the main axis of the contact lens;
- Figure 8 shows a schematic front view of a fourth example of a contact lens according to the present disclosure, when projected into a facial plane perpendicular to the main axis of the contact lens;
- Figure 9 shows a schematic front view of a fifth example of a contact lens according to the present disclosure, when projected into a facial plane perpendicular to the main axis of the contact lens;
- Figure 10 shows a schematic front of view of a sixth example of a contact lens according to the present disclosure, when projected into a facial plane perpendicular to the main axis of the contact lens;
- Figure 11 shows a schematic front of view of a seventh example of a contact lens according to the present disclosure, when projected into a facial plane perpendicular to the main axis of the contact lens;
- Figure 12 is a diagram showing a first embodiment of a method according to the present disclosure;
- Figure 13 is a diagram showing a second embodiment of a method according to the present disclosure;
- Figure 14 shows a graphical representation of an example of the target optical function according to the present disclosure;
- Figure 15 shows a graphical representation of an example of the first, second and third optical functions, obtained with the lens design shown on figure 11;
- Figure 16 shows a graphical representation of two examples of the third optical function obtained with the lens design shown on figure 10 and with the lens design shown on figure 11.

In the present disclosure, including the claims, the verb "to comprise" is to be interpreted in an inclusive sense.

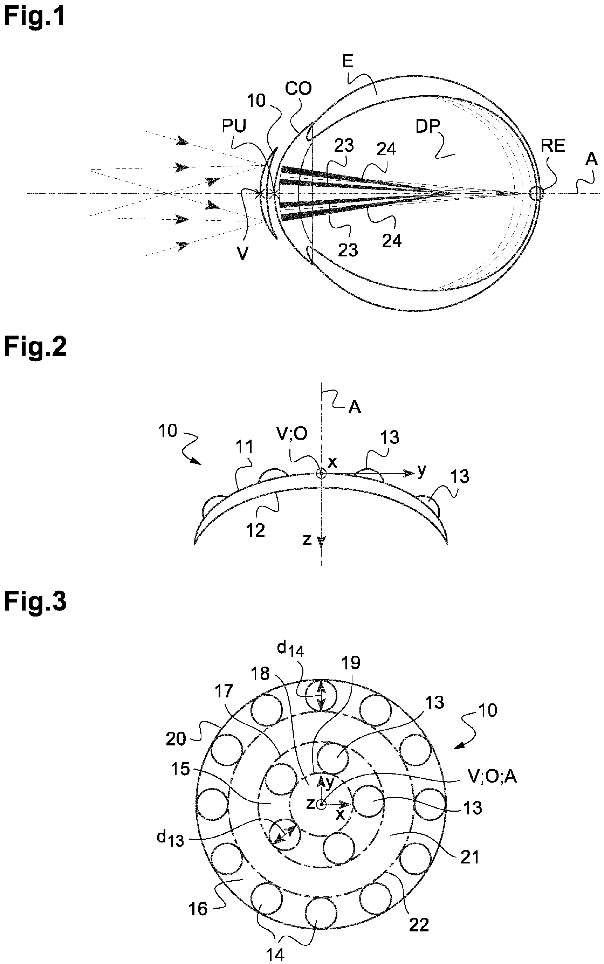

As shown on figure 1, the contact lens 10 is intended to be positioned on an eye E of the wearer, for example the left eye or right eye of the wearer.

The wearer may wear another contact lens on his other eye. This other contact lens has a design which is preferably defined similarly to the one of the contact lens 10 and according to the present disclosure.

As shown on figures 1 and 2, the contact lens 10 presents a general shape of revolution around a main visual axis A passing through a center or vertex V of a convex front face 11. The contact lens 10 has a concave rear face 12 that is intended to be in contact with the cornea CO of the eye E.

The contact lens 10 has an optical design comprising a macro-optical component and a micro-optical component.

The macro-optical component of the optical design (or "macro-optical design") provides a macro-optical function providing at least one global refractive power over most or all the useful radial width of the contact lens, to provide the wearer's eye a dioptric correction adapted to the dioptric correction need of the wearer in wearing conditions. For example, this macro-optical function is provided by the geometry of the front face 11 or of the rear face 12 or of both faces, typically by adapting the curvature radii of one or both faces of the lens. The refractive power of the contact lens can be for example comprised between - 20 diopters and + 20 diopters, typically between -10 diopters and +10 diopters.

The refractive power provided by the macro-optical design comprises at least a spherical power and may also comprise a cylindrical power, a prismatic deviation power, according to the wearer's correction need determined by an eye care professional in order to correct the vision defects of the wearer. For example, the prescription for an ametropic wearer comprises the values of optical power and of astigmatism comprising a cylinder and an axis for distance vision and/or for near vision.

The wearing conditions are to be understood as the position of the contact lens on the eye of the wearer. The wearing conditions are achieved when the contact lens is positioned on the cornea CO of the eye E of the wearer and when the ophthalmic contact lens vertex V is aligned in front of the center of the pupil PU of the eye of the wearer. The center of the pupil PU of the eye is aligned on the main visual axis A of the contact lens.

The micro-optical component of the optical design (or "micro-optical design") of the contact lens is made of several micro-optical elements 13, 14 arranged on at least one of the front and rear faces of the lens, preferably the convex front face.

Each micro-optical element has its own optical function and has small dimensions of less than 2 mm, preferably less than 1 mm. Each micro-optical element consists for example in a microlens, a Pi-Fresnel lens, a prism, a diffuser, a beam-splitter or a diffraction grating. The micro-optical elements are typically formed by photolithography, holography, molding, machining or encapsulation. On figure 2, the micro-optical elements are microlenses and thus present a circular contour.

This arrangement of micro-optical elements provides a micro-optical function which is distinct from and complements the macro-optical function. Thus, the global optical function of the contact lens is the addition of its macro-optical function and of its micro-optical function respectively provided by the macro-optical and micro-optical components of its optical design. The micro-optical function of the contact lens is the optical function provided by the contact lens without its macro-optical design, that is without any global refractive power over most or all the useful radial width of the contact lens. The macro-optical function of the contact lens is the optical function provided by the contact lens without its macro-optical design, that is without any micro-optical element.

In the example illustrated on figure 2, the micro-optical elements 13 are located on the front face 11 of the contact lens 10.

Alternatively, at least a part or all the micro-optical elements 13 are located on the rear face 12 of the contact lens 10.

Still alternatively, at least a part or all the micro-optical elements 13 are located between the front face 11 and the rear face 12 of the contact lens 10.

Still alternatively, at least a part or all the micro-optical elements 13 are formed on a film, in a form of a patch deposited on at least one of the front face 11 and the rear face 12 of the contact lens 10.

In a variant, at least part or all the micro-optical elements 13 are formed by lamination on at least one of the front face 11 and the rear face 12 of the contact lens 10.

As shown on figures 3-4 to 7-11, the contact lens comprises at least two different zones in which the micro-optical elements are arranged Specifically, the micro-optical elements of one of the two different zones can be arranged differently from the micro-optical elements of another of the two different zones. The wording "zone" is relative to a portion of the contact lens. The zones are illustrated or defined in a same projection plane which is perpendicular to the main axis A of the contact lens. Consequently, when a zone of the contact lens is compared with another zone of the contact lens, said two zones are illustrated or defined in the same projection plane without considering the curvature of the contact lens.

Each of the zones of the contact lens comprises an arrangement of several micro-optical elements.

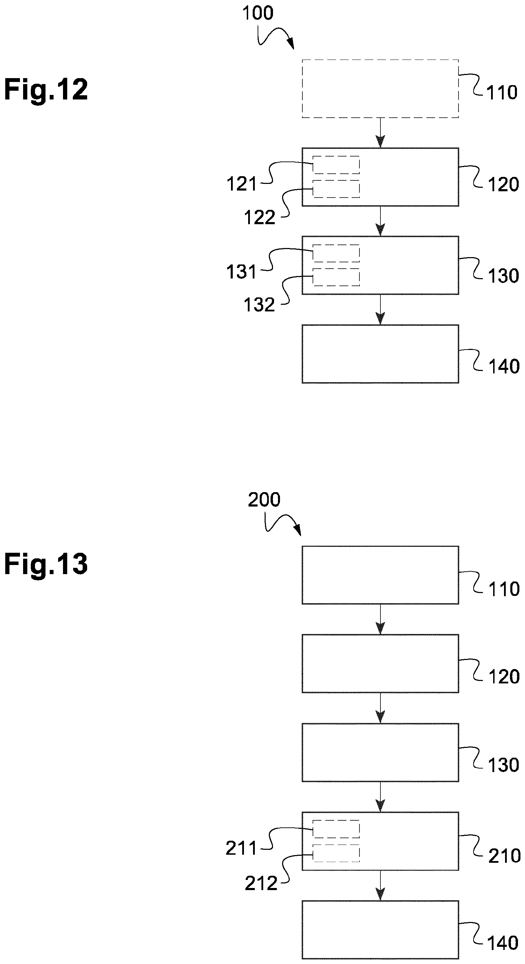

Figure 12 shows a first example of a method 100 according to the present disclosure. The method 100 is a method for designing the contact lens 10, 30, 40, 50, 60 as illustrated on figures 3-9.

The method 100 first comprises a step 110 of defining a preliminary lens optical design of the corrective contact lens 10, 30, 40, 50, 60.

The method 100 further comprises, for different zones of the contact lens, a step 120,130 of determining a value of at least one optical feature of the micro-optical elements 13 superimposed on the contact 10, 30, 40, 50, 60.

The method 100 further comprises a step 140 of providing a final lens design of the contact lens 10, 30, 40, 50, 60.

The contact lens is then manufactured according to this final optical design.

The method is implemented by a computer. The computer may be a processor, a calculation module or a calculator or a calculation unit. The steps of defining 110, determining 120, determining 130, providing 140 (and determining 210 of figure 13) are implemented by a single calculation module or they are each implemented by separate calculation modules communicating with one another through a direct or a network link.

In the step of defining 110, the preliminary lens optical design is adapted to provide the above-mentioned macro-optical function of the contact lens 10, 30, 40, 50, 60 with the prescribed refractive power. For example, the preliminary lens optical design comprises the geometry of the front face or of the rear face or of both faces, typically the curvature radii of one or both faces.

The preliminary lens optical design also comprises:
- the positions and sizes of the different zones of the contact lens,
- the optical design(s) of the micro-optical elements comprised in each zone,
- an initial quantity of micro-optical elements in each zone,
- initial value(s) of one or several optical features of the micro-optical elements of each zone amongst the following:
   - dioptric power;
   - geometry, i.e. shape of the surface of the micro-optical element;
   - refractive, diffractive or diffusive optical function;
   - focal length;
   - diameter or size;
   - position.

In a non-limitative example illustrated by figure 3, the contact lens 10 is divided in two zones: a central disk-shaped first zone 15 and an annular-disk-shaped second zone 16.

In the step of defining 110, the size of the first and second zones are defined.

In the example shown on figure 3, the first zone 15 starts from the ophthalmic lens optical vertex V of the contact lens 10 and is bounded by a circular outline 17. The first zone 15 can comprise at least one sub-zone 18 bounded by a circular outline 19. This sub-zone 18 lacks micro-optical element and covers at least 10 percent of the first zone 15. For example, the sub-zone 18 has a diameter of 2 millimeters and is centered on the ophthalmic lens optical vertex V of the contact lens 10. Such feature allows preserving the visual acuity of the wearer, typically when the pupil of the wearer is a small pupil obtained in high light condition (i.e. outdoor conditions when myopia control provided by microlenses is not necessary).

The first zone 15 and the second zone 16 are concentric. The second zone 16 can also be centered on the ophthalmic lens optical vertex V10 of the contact lens 10. The second zone 16 surrounds the first zone 15 and is bounded internally by the circular outline 17 of the first zone 15 and externally by a circular outer outline which coincides with the outer edge 20 of the contact lens 10.

In a non-limitative example, the outer circular outline 17 of the first zone 15 presents a diameter between 2,00 millimeters and 5 millimeters, preferably between 2 and 4 millimeters.

Preferably, the inner circular outline of the second zone 16 presents a diameter between 2,00 millimeters and 5 millimeters, preferably between 2 and 4 millimeters. Preferably, the external outline (i.e. the outer edge 20) of the second zone 16 presents a diameter between 4,00 millimeters and 10 millimeters, preferably between 4,00 millimeters and 8 millimeters.

The contact lens 10 has a first area and a second area. The first area is comprised in the first zone 15 and comprises a part or all of the micro-optical elements 13 of the first zone (in this example, all the micro-optical elements 13 of the first zone 15). In this example, the first area of the contact lens 10 is bounded by an outer outline which coincides here with the outline 17 bounding the first zone 15. It means that the first area also comprises the sub-zone 18 which is free of micro-optical elements. The second area is comprised in a union of the first zone 15 and of the second zone 16 and comprises a part or all of the micro-optical-elements 14 of the second zone 16 (here all the micro-optical elements 14 of the second zone 16). The second area of the contact lens 10 also comprises the micro-optical elements 13 of the first zone 15. It means that the second area of the contact lens 10 overlaps the first zone 15 and the second zone 16. In this example, the second area comprises the whole contact lens 10.

In a non-limiting example, the outer outline of the second zone 16 (and thus the outer edge 20 of the contact lens 10) presents a diameter of 10,00 millimeters. The outline 17, which is the inner outline of the second zone 16 and the outer outline of the first zone 15, presents a diameter of 4,00 millimeters.

Defining a first 15 and second 16 zones having a different size allows considering the variation of the size of the pupil of the eye E of the wearer. Consequently, the method 100 provides a corrective lens having an optical lens design determined by considering the variation of the pupil diameter. The method 100 provides a corrective contact lens 10 with a better tradeoff between visual acuity, myopia control efficacity, for example the visual discomfort due to the micro-optical elements realizing the control of the evolution of the myopia.

The second zone 16 comprises a sub-zone 21 lacking micro-optical element and covering at least 10 percent of the second zone 16. For example, the sub-zone 21 has an annular disk shape, with an inner outline presenting a diameter of 4 millimeters and an outer outline 22 presenting a diameter of 6 millimeters. In this example, the sub-zone 21 of the second zone 16 is centered on the vertex V of the contact lens 10. Such feature allows preserving the visual acuity of the wearer in the second zone 12. With the sub-zone 21 shown on figure 3, the micro-optical elements 13 of the first zone do not touch the micro-optical elements of the second zone 16.

The micro-optical elements 13 of the first zone 15 have a size diameter d₁₅ which, when projected into the facial plane (perpendicular to the main axis of the contact lens), is fixed between 0,3 millimeter to 2 millimeters. The diameter d₁₆ of the micro-optical element 14 of the second zone 16 have a size which, when projected into the plane, is fixed between 0,3 millimeter to 2 millimeters. The diameter of the micro-optical elements can depend on the type of micro-optical element (refractive unifocal or bifocal, spherical or aspherical or toric, diffractive or Pi Fresnel). Examples of the determination of the diameter can be found in the European application reference EP3923061A1, in the PCT application reference WO2021/198362, in the PCT application reference WO2019/206569A1 and the PCT application reference WO2019166653A1.

The micro-optical elements 13 of the first zone 15 can be configured to have a spherical power between 1 diopter to 20 diopters, preferably between 1 diopter to 10 diopters, and the micro-optical elements 14 of the second zone 16 are configured to have a spherical power between 1 diopter to 20 diopters, preferably between 1 diopter to 10 diopters.

The micro-optical elements 13 of the first zone 15 are defined to have a surface shape, for example a prismatic or spherical or aspherical or toroidal surface shape and the micro-optical elements 14 of the second zone 16 are defined to have a surface shape, for example a prismatic or spherical or aspherical or toroidal surface shape.

Each refractive micro-optical element 13, 14 can be a monofocal or a bifocal micro-optical element.

Each diffractive micro-optical element 13, 14 comprises for example a diffractive Pi-Fresnel micro-lens. A diffractive Pi-Fresnel micro-lens has a phase function, which presents π phase jumps at the nominal wavelength λ0. The wavelength λ0 is preferably 550 nm for human eye vision applications. The diffractive Pi-Fresnel micro-lens presents an optical axis passing through the optical center of the micro-lens. The micro-lens with diffractive Pi-Fresnel micro-optical elements mainly diffracts in two diffraction orders associated with two dioptric powers P0(λ0) and P1(λ0). Thus, when receiving collimated light, the micro-lens concentrate light on two distinct areas on their axis.

For example, the dioptric power P0(λ0) is comprised in a range of +/-0.12 diopter in addition to a spherical power of the predetermined refractive power of the contact lens 10, deriving for example from a prescription for the wearer.

According to an embodiment, the dioptric power P1(λ0) is comprised in absolute value between 1 diopter (i.e. ±1 diopter) and 10 diopters (i.e. ±10 diopters). Preferably, the dioptric power P1(λ0) is comprised between ±2 diopters and ±6 diopters.

As an alternative, each diffractive micro-optical element 13, 14 comprises a diffusive micro-optical element scattering light. For example, a collimated light is scattered in a cone with an apex angle ranging from +/-1° to +/- 40°. In an example, the diffusive micro-optical elements are adapted to scatter light locally, i.e. at the intersection between the given micro-optical element and the wavefront arriving on the given micro-optical element. The micro-optical elements having a diffusive optical function may be similar to the micro-optical elements described in the document US10302962.

In addition, the positions of the micro-optical elements of each zone are defined by three-dimensional spatial coordinates (x, y, z) defined according to three spatial axes. The first and second spatial axes (x, y) are contained into the facial plane of projection (perpendicular to the main axis of the contact lens) and define the position over the field of view though the contact lens. The third spatial axis z coincides to the main visual axis A of the contact lens and gives the position along this axis (in other words, it relates to the distance to the eye). This three-dimensional spatial coordinates system (x, y, z) has an origin O positioned on the ophthalmic vertex V of the front face of the contact lens. The value of the three-dimensional spatial coordinates (x, y, z) of each micro-optical element allows defining where the micro-optical element is positioned in the field of view of the contact lens and whether the micro-optical element is positioned on the front face or rear face of the contact lens or embedded in the thickness of the contact lens. Generally, the micro-optical elements are located on the rear face of the contact lens, the front face of the contact lens or in the depth of the contact lens.

When several micro-optical elements 13, 14 are defined in the first zone 15 and/or second zone 16 at the step of defining 110, the optical feature comprises the density or the number of micro-optical elements. The density of micro-optical elements on a zone can be defined as the ratio between the total surface of the micro-optical elements and the area of the zone. Thus, in the example illustrated by figure 3, the density or the number of micro-optical elements is set in the step of defining 110. Preferably, the density is selected such that the micro-optical elements 13 cover 20 to 80 percent of the first zone 15 and respectively the density is selected such that the micro-optical elements 14 cover 20 to 80 percent of the second zone 16. For example, in the step of defining 110, the first zone 15 comprises five micro-optical elements 13 and the second zone 16 comprises twelve micro-optical elements 14. When the first zone 15 and/or the second zone 16, comprise(s) several micro-optical elements, each optical element of the first zone 15 and/or the second zone 16 are/is spaced from the adjacent micro-optical elements by at least 0,5 millimeter. For example, the edge of one of micro-optical element 13, 14 comprised in the first zone 15 or in the second zone 16 is spaced from the edge of an adjacent optical element by 1 millimeter.

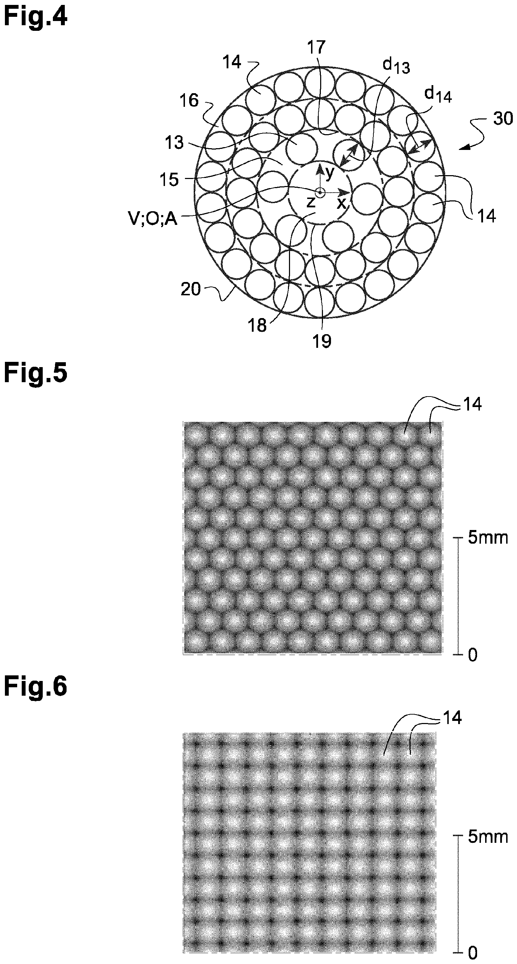

Some micro-optical elements belonging to one zone may touch some micro-optical elements belonging to another zone (See figure 4). Thus, each micro-optical element of the first zone 15 is spaced between 0 to 2 millimeters from adjacent micro-optical elements belonging to the second zone 16.

In a preferred embodiment, the optical features of all the micro-optical elements 13 of the first zone 15 have respectively the same values and the optical features of all the micro-optical elements 14 of the second zone 16 have respectively the same values. For example, in the step of defining 110, the micro-optical elements 13 of the first zone 15 are refractive microlenses having a diameter of 1 millimeter, a dioptric power of 4 diopters and the micro-optical elements 14 of the second zone 16 are refractive microlenses having a diameter of 1 millimeter, a dioptric power of 4 diopters.

In another embodiment, the micro-optical elements 13 of the first zone 15 have each at least one optical feature whose value differs from micro-optical element 13 to micro-optical element 13 of the first zone 15 and the micro-optical elements 14 of the second zone 16 have each at least one optical feature whose value differs from micro-optical element 14 to micro-optical element 14 of the second zone 16. For example, some micro-optical elements 14 of the second zone 16 have a spherical dioptric power of 4 diopters whereas other micro-optical element 14 of the second zone 16 have a spherical dioptric power of 2 diopters. Each optical feature of the micro-optical element 13, 14 comprised in the first and second zones are defined in the step of defining 110.

In a non-limitative example, the micro-optical elements 13 of the first zone 15 have optical features adapted to provide a first myopia control function and the micro-optical elements 14 of the second zone 16 have optical features adapted to provide a second myopia control function of the wearer's myopia. Typically, the first and second myopia control functions are each achieved by the micro-optical function provided by the micro-optical elements of the given zone.

Such embodiment provides a contact lens 10 allowing to control both the growth of the myopia and discomfort of the wearer.

The first myopia control function depends on the optical features of the micro-optical elements 13 comprised in the first zone 15 and the second myopia control function depends on the optical features of the micro-optical elements 14 comprised in the second zone 16, for example, according to a number or density of the micro-optical elements, the dioptric power, the focal length of the micro-optical elements, the diffusive or refractive or refractive optical function of the micro-optical elements, the spacing between adjacent micro-optical elements etc.

To this effect, the micro-optical elements 13 of the first zone 15 have optical features adapted to provide a specific spatial distribution of blur and the micro-optical elements 14 of the second zone 16 have optical features adapted to provide another spatial distribution of blur differing from the one provided by micro-optical elements 13 of the first zone 15 when these micro-optical elements have a diffractive optical function. The spatial distribution of blur is also called defocus effect.

In a variant, when the micro-optical elements provide a diffusive or a diffracted optical function, the light that enters in the eye E of the wearer is scattered (e.g. non focused). Thanks to the first myopia control function and the second myopia control function, the light beam (composed of light rays) that passes thought the first zone 15 and the second zone 16 of the contact lens 10 is separated into two parts:
- a first part that corresponds to light rays which are deviated by the macro-optical component of the contact lens 10 and which are not affected by the arrangement of micro-optical elements of the given zone. Typically, the first part corresponds to light rays that do not pass through one of the micro-optical elements of the arrangement of micro-optical elements belonging to a given zone;
- a second part that corresponds to light rays which are affected by the micro-optical component (i.e. the arrangement of micro-optical elements) of the contact lens 10 and by the macro-optical component.

Typically, the second part of the light beam is referred to as myopia control signal.

The myopia control signal depends on the features of the micro-optical elements, here based on the given evolution control function of the myopia (first or second evolution control function of the myopia). Typically, the myopia control signal depends on the refractive, diffractive or diffusive optical function of the micro-optical elements. To this end, the myopia control signal is:
- a diffusive signal if the micro-optical elements have a diffusive function. As explained above, the diffusive signal corresponds to a non-focused signal, typically a scattered signal;
- a diffractive signal if the micro-optical elements have a diffusive function. As explained above, the diffractive signal corresponds to a non-focused signal, typically a scattered signal;
- a refracted signal if the micro-optical elements have a diffusive function (defocus effect).

The figure 1 shows a first myopia control signal provided by the micro-optical elements comprised in the first zone 15 and a second myopia control signal provided by the micro-optical elements comprised in the second zone 16 (defocus effect). Light rays 23 of the first myopia control signal and light rays 24 of the second myopia control signal that enter into the eye E of the wearer are focused in front of the surface of the retina RE, on a defocus plane DP positioned in front of the surface of the retina RE. In contrast, the macro-optical function of the contact lens 10 providing the prescribed refractive power for dioptric correction of the eye focuses light rays that enter into the eye on the retina surface of the retina RE of the eye.

The first myopia control function may be similar to the second myopia control function of myopia. Having the first myopia control function and the second myopia control function identical allows the balance between visual acuity and performance of the myopia control to be identical for the different sizes of the pupil. The first myopia control function of the myopia can also differ from the second myopia control function of the myopia. This allows to have the balance between visual acuity and performance of the myopia control depending on the size of the pupil.

In an embodiment, the micro-optical elements 13, 14 comprise microlenses providing a refractive power. The refractive power of the micro-optical elements 13, 14 (microlenses) differs from the refractive power of the macro-optical component of the contact lens 10. In other embodiments, the micro-optical elements 13, 14 may provide a diffractive or diffusive micro-optical function as explained above.

After defining the preliminary lens optical design of the contact lens 10, the method carries out the step of determining 120 the value of at least one feature of the micro-optical elements 13 comprised in the first zone 15. To this effect, a first optical function of the contact lens 10 is calculated throughout the first area of the contact lens 10. Then, this first optical function is compared to a first target optical function.

Similarly, after defining the preliminary lens optical design of the contact lens 10, the method carries out the step of determining 130 the value of at least one feature of the micro-optical elements 14 comprised in the second zone 16. To this effect, a second optical function of the contact lens 10 is calculated throughout the second area of the contact lens 10. This second optical function is then compared to a second target optical function.

Different optical features or only one optical feature are/is determined for the micro-optical elements 13, 14 in the step of determining 120, 130. In the present disclosure, the method 100 starts by determining one optical feature of the micro-optical elements in a given area. The steps of determining 120, 130 are carried out sequentially. Here, the step of determining 120 the value of the optical feature of the micro-optical elements 13 of the first zone 15 is carried out before the step of determining 130 the value of the optical feature of the micro-optical elements 14 of the second zone 16.

Thus, the step of determining 130 takes into account the optical feature of the micro-optical elements determined in the previous step 120. Consequently, only the optical feature of the micro-optical elements 14 positioned in the second zone 16 is determined in step 130. This technical feature improves the accuracy of the determination of the value of the optical feature of the micro-optical element and to take into account during the design possible variations of the size of the pupil. It provides a way to realize a tradeoff between performance of the myopia control function and the visual accuracy obtained using the contact lens when designed using the method 100. In addition, the steps of determining 120, 130 are easier to implement and less time consuming.

By "optical function", it is meant a function allowing to quantify the quality of the optical design of the contact lens as a whole or a specific area or zone of the optical design of the contact lens.

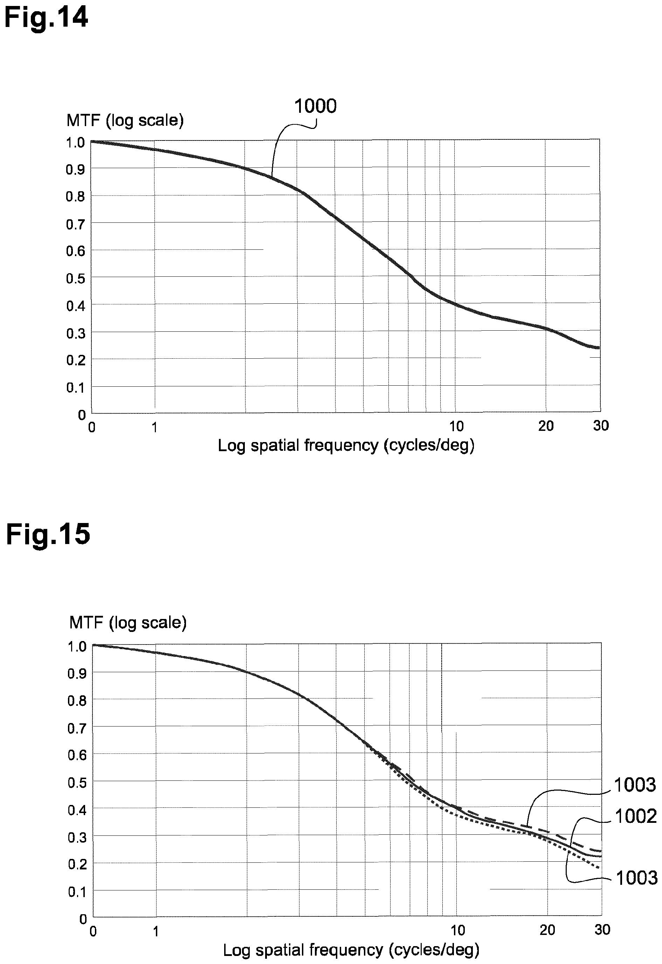

Typically, the first and second optical functions and the first and second target optical functions are each based on
- a Point Spread Function giving the degree of spreading (blurring) in the image of a point object throughout the considered area of the contact lens. The point spread function allows disclosing the image of a points seen through the contact lens. In the present disclosure, the Point Spread Function is estimated by simulation known of the man skilled in the art, using a punctual source emitting in the monochromatic or polychromatic visible spectrum between 400 nm to 780 nm (λ), typically in a form of an ideal gaussian (M²=1), centered on vertex V of the contact lens 10. For each wavelength λ , the point spread function is calculated as the squared magnitude of the inverse Fourier transform of an aperture function P(x, y) defined as P(x, y) = A(x, y)exp(ikW(x, y)) positioned on a plane of preliminary design of the contact lens on which the micro-optical elements 13, 14 are arranged, where k is the wave number (2π/λ), λ the wavelength of the punctual source preferably equal to 550 nm, A(x, y) an apodization function equal to 1, and W(x, y) corresponding to the optical path difference provided by the contact lens.
- a Modulation Transfer Function giving the percentage of transferred contrast throughout the considered area of the contact lens as a function of the spatial frequency (expressed as cycles per degree). The use of the modulation transfer function in the method according to the present disclosure will be explained above on figures 14-16.

The modulation transfer functions according to the present disclosure can be computed on different specific zones of optical design of the contact lens by spatially scanning the field of view of contact lens 10 using a simulated aperture that can be defined for several central vision gaze directions. Typically, the Point Spread Function (PSF) giving the degree of spreading (blurring) in the image of a point object throughout a considered portion of the contact lens (defined by the aperture) is computed as explained above. Then, the modulation transfer function is computed based on the Fourier transform of the computed point spread function.

For example, the first and second optical functions and the first and second target optical functions may be a function as defined in the document "Accuracy and precision of objective refraction from wavefront aberrations", doi: 10.1167/4.4.9.

According to an example, the first target optical function and the second target optical function are the same target function for the first and second zones within a tolerance less of 10 percent. This embodiment provides a method easier to implement and less time consuming.

In addition, the modulation transfer function according to the present disclosure can be calculated for spatial frequencies comprised between 1 and 30 cycles per degree. In a variant, the modulation transfer function in the present disclosure can be calculated for specific ranges of spatial frequencies, for example for spatial frequencies comprised between 1 and 5 cycles per degree, and/or between 5 and 20 cycles per degree and/or between 20 and 30 cycles per degree. Typically, the selection of specific ranges of spatial frequencies allows optimizing the optical design of the contact lens for specific visual tasks, for example reading activities. Typically, the low spatial frequencies (i.e. lower than 10 cycles per degrees) allow readers to see very quickly words, the coarse form of the words and lines whereas the higher spatial frequencies allow readers to see fine details of the words such as the precise form, location of the letters, which are used to access to words and sentences meaning.

In another example, the first target optical function and the second target optical function are different. This embodiment provides selecting specific optical features of the micro-optical elements in the different zones. This embodiment allows a better adaptation of the contact lens to different situations, for example indoor or outdoor environment, far vision or near vision activities. Indeed, during the near vision activities, the size of the pupil of the wearer is different (generally larger) than the size of the pupil during far vision activities. The contact lens designed using this embodiment can help to be more efficient in both cases.

Optionally, the step of determining 120 comprises a step of defining the first target optical function and the step of determining 130 comprises a step of defining the second target optical function. The first target optical function and the second target optical function can be for example Modulation Transfer Functions (MTF) with predetermined values associated respectively to spatial frequencies. The values are chosen depending on the need for visual acuity and the level of myopia control needed. Generally, the low spatial frequencies will have an impact on the level of myopia control and the high spatial frequencies will have an impact on the visual acuity

In the method 100 shown on figure 12, the first, second optical functions and the first and second target optical functions are modulation transfer functions. Thus, in the step of determining 120, the computer compares (in a first comparison) the values of the first modulation transfer function with the values of the first target optical function over at least one range of spatial frequencies, for example for spatial frequencies comprised between 0 and 5 cycles per degree and/or comprised between 10 and 20 cycles per degree and/or comprised between 20 and 30 cycles per degree and/or between 10 and 30 cycles per degree and/or between 0 and 30 cycles per degree. Similarly, in the step of determining 120, the computer compares (in a second comparison) the values of the second modulation transfer function with the values of the second target optical function over at least one range of spatial frequencies, for example for spatial frequency comprised between 0 and 5 cycles per degree and/or comprised between 10 and 20 cycles per degree and/or comprised between 20 and 30 cycles per degree and/or between 10 and 30 cycles per degree and/or between 0 and 30 cycles per degree. In a preferred embodiment, in the steps of determining 120, 130, the first comparison and the second comparison are each carried out within each spatial frequencies comprised between 0 and 5 cycles per degree and within each spatial frequencies comprised between 10 and 20 cycles per degree and/or between 10 and 30 cycles per degree and/or between 0 and 30 cycles per degree. The first and second comparisons are preferably carried out for spatial frequencies comprises between 0.5-5 cycles per degree and/or between 10 and 15 cycles per degree and/or between 20 and 30 cycles per degree because these ranges of spatial frequencies correspond to the spatial frequencies involved in reading activities.

According to one embodiment, the steps of determining 120, 130 the value of the optical feature of the micro-optical elements of the zones comprise each an iterative optimization process comprising the following steps:
- modifying 121, 131 the optical feature of the micro-optical elements 13, 14,
- checking 122, 132 if the first or second comparison satisfies a criterion,
- if the criterion is not satisfied, reiterating modifying 121, 131 and checking 122, 132.

The iterative optimization process in the present disclosure is an iterative loop and used an optimization method, for instance the gradient descent or a Newton's algorithm to find the optical feature of the micro-optical elements 13, 14 that satisfies the criterion defined in the iterative optimization process.

In the step of modifying 121, 131, the value of the optical feature defined in the step of defining is changed with another value of the optical feature. For example, the optical feature is changed with a defined step, for example by decrementing or incrementing the value of the optical feature in steps of 0.5. In some embodiments the step can be modified during the process for example by randomly generating an initial step and to modify it during the method. In another embodiment, the step to change the optical feature may be automatically determined by programming the method gradient descent or a Newton's algorithm in this way. This allows finding the most suitable values of optical features of the micro-optical elements of the first and second zones 11, 12.

The optical features of the micro-optical elements 13, 14 which is modified is one of the following: the dioptric power, the refractive, diffractive or diffusive optical function, the focal length, the diameter or size, the position of the micro-optical elements 13, 14. In addition, as the contact lens 10 shown on figure 3 comprise several micro-optical elements 13, 14, in each zone, the density of the micro-optical elements defined in the first zone 15 and the second 16 zones may change in the step of modifying 121, 131.

In the step of determining 120, the diameter of the micro-optical elements 13 of the first zone 15 is selected between 0,3 millimeter to 2 millimeters, and the diameter d₁₆ of the micro-optical elements 14 of the second zone 16 is selected between 0,3 millimeter to 2 millimeters. The micro-optical elements 13 of the first zone 15 is defined to have a spherical power between 1 diopter to 20 diopters, preferably between 1 diopter to 10 diopters, and the micro-optical elements14 of the second zone 16 is defined to have a spherical power between 1 diopter to 20 diopters, preferably between 1 diopter to 10 diopters.

In addition, the surface shape of the micro-optical elements positioned in each zone may be changed into a spherical, aspherical, toroidal or atoric surface shape. The refractive optical function may be for example changed into a diffractive optical function or inversely.

In this example shown on figure 3, the dioptric power of the micro-optical elements 13 is selecting as the optical feature that is optimized for the first zone 15 and the diameter of the micro-optical elements 14 is selected as the optical feature that is optimized of the second zone 16. It means that different optical features can be selected for the first and second zone. In another embodiment, the optical features selected for the first and second zones are the same.

In steps of checking 122, 132, the criterion to be satisfied may be a minimum of a quadratic deviation (for example a sum of the squared differences) between the first optical function and the first target function and/or a minimum of a quadratic deviation between the second optical function and the second target function, or a minimum of a specific cost function, or a value or a range of values of the first and second target optical functions, or a threshold value etc. when the criterion for the first zone 15 is a minimum of a quadratic deviation between the first optical function and the first target function, the optical feature of the micro-optical elements 13 comprised in the first area is calculated (i.e. modified) so as to minimize the quadratic deviation between the first optical function and the first target function. Similarly, when the criterion for the second zone 16 is a minimum of a quadratic deviation between the second optical function and the second target function, the optical feature of the micro-optical elements 13, 14 comprised in the second area is calculated (i.e. modified) so as to minimize the quadratic deviation between the second optical function and the second target function. By way of non-limiting example, the deviation might be a root mean square deviation. A minimum is detected, when the quadratic deviation between the first optical function and the first target optical function does not change anymore (for example, when the quadratic deviation between two successive iterations is lower than a predefined threshold). In that case, the iterative optimization process of said embodiment ends. Same applies for the deviation between the second optical function and the second target function.

In another embodiment, the criterion is a specific cost function. The cost function can be based on the integral of the value of the modulation transfer function and the integral of the value of a target modulation transfer function

When the criterion for the first and second zones is a minimum of a specific cost function, the optical feature of the micro-optical elements 13 comprised in the first area and the optical feature of the micro-optical elements 14 comprised in the second area are each calculated (i.e. modified) so as to minimize this specific cost function. By way of non-limiting example, the iterative optimization process of said embodiment minimizes the following cost function for the first and/or second areas of the contact lens 10 and it ends when the value of the cost function is lower than a given quantity. As for the embodiment explained above, the iterative optimization process ends when the minimization of the cost function does not change anymore.

In another embodiment, the criterion is a range of values of the first target optical function and/or a range of values of the second optical function. In this example, the optical feature of the micro-optical elements of each zone is changed until the first optical functions and respectively the second optical function present values comprised in the range of values of the first target optical function and respectively the second target optical function. Otherwise, one can use the standard stopping criteria of the optimization functions (precision on the parameters, precision on the cost function, number of iterations). In a preferred embodiment, when the first and respectively the second target optical functions reach their respective criterion, a new iteration starts (i.e. It means that the optical feature is changed) to verify if better result is obtained with this new optical feature. If not, the optical feature of the previous iteration is selected to be the optical feature of the micro-optical elements 13, 14. The optimization loops may be reiterated until the values of the first and second optical functions are equal to a medium value of the range of values of the first or second target optical function.

In another embodiment, the criterion is a threshold value. It means that when the first, and respectively, the second target optical functions comprise a value that reaches the threshold value, the steps of determining 120, 130 stops.

In addition, the optimization process of the method 100 may comprise a stop criterion corresponding to a number of iterations in addition to the criterion explained above. The stop criterion corresponds to an additional criterion and is used with one of the criteria disclosed above. The stop criterion allows stopping the iterative optimization process when the criterion explained above is not reached, for instance when no minimum or threshold value are reached. By way of non-limiting example, the number of iterations may be set between 10 to 2000 (for example between 10 to 100), for example, when the first and second target optical functions are defined. In the embodiment of the iterative optimization process, when the current iteration reaches the number of iterations set, the optimization process ends even if the criterion explained above is not satisfied.

In the method 100, if the criterion is satisfied, for example, when the result of the cost function reaches its minimum (or one of its minima) or is brought below a predefined threshold value, or when the current iteration reaches the number of iterations set, the optimization loop of the step of determining 120, 130 ends. It means that the determined value of the optical feature of the micro-optical elements 13 comprised in the first zone 15 has the value of the optical feature given at the end of the step of checking 122 of the step of determining 120. Similarly, the determined value of the optical feature of the micro-optical element 14 comprised in the second zone 16 has the value of the optical feature given at the end of the step of checking 132 of the step of determining 130.

If the criterion is not satisfied in the step of checking 122, a new iteration of the step of determining 120 is implemented so as to reiterate the steps of modifying 121 and checking 122 of the step of determining 120. Similarly, if the criterion is not satisfied in the step of checking 132 of the step of determining 130, a new iteration of the step of determining 130 is implemented so as to reiterate the steps of modifying 131 and checking 132 of the step of determining 130.

The new iteration is performed from the step of modifying 121, 131 to the step of checking 122, 132 of the steps of determining 120, 130 where it is checked again whether the criterion is satisfied. If the criterion is a number of iterations, the loop is reiterated until the result of the cost function reaches a minimum at the last iteration, etc, or the optimization loop reaches the number of iterations set.

When a number of iterations is set, at the end of the last iteration, the optical feature is assigned to be the optical feature provided at the end of the step of checking 122, 132 of the step of determining 120, 130. More specifically, the optical feature of the step determining 120, 130 has the value selected in the step of modifying 121, 131 of the last optimization loop iteration of the step of determining 120, 130.

Preferably, at the end of the step of checking 122, the value of the optical feature providing the lowest quadratic deviation value in the loop will be assigned as the value of the optical feature of the micro-optical elements 13 comprised in the first zone 15 and respectively at the end of the step of checking 132, the value of the optical feature providing the lowest quadratic deviation value in the loop will be assigned as the value of the optical feature of the micro-optical elements 14 comprised in the second zone 16. In that case, the loop of the step of determining 120, 130 may stop when the lowest value is reached, even if the number of iterations is set.

In each step of determining 120, 130, if the value of the optical feature does not allow reaching the criterion, for example a minimum of the quadratic deviation, or the minimum of the cost function, etc., the step of determining 120, 130 is stopped by the number of iterations set. In that case, several optical features are selected by the computer to be determined in a new iteration loop of the step of determining 120 ,130. In the step of determining 120 of the current example, only the selected optical feature (e.g. the dioptric power) the micro-optical elements 13 of the first zone 15 is changed. However, for the second zone 16, changing the only value of the diameter of the micro-optical elements 14 of the second zone 15 was not sufficient to reaches the criterion. Thus, the diameter and the dioptric power have been determined in the step of determining.

Then, the method 100 comprises the step of providing 140 the final lens design of the contact lens 10. The final lens design is based on the preliminary lens optical design and on the value of the optical feature(s) of the micro-optical elements determined at the end of the steps of determining 120, 130. The final lens optical design corresponds to the optical design of the contact lens 10 intended to be worn by the wearer.

The final lens design of the contact lens is then used to manufacture the contact lens 10 which is then intended to be worn by the wearer to help improve his vision. In that case, the final lens design of the contact lens 10 becomes the optical design of the contact lens 10 which is manufactured and worn by the wearer.

At the end of the method 100, the micro-optical elements 13 shown on figure 3 are refractive microlenses having 1 millimeter in diameter, a dioptric power of 4 diopters, a focal length of 1000 millimeters, and the micro-optical elements 14 of the second zone 16 are refractive microlenses having 1 millimeter in diameter, a dioptric power of 4 diopters, a focal length of 250 millimeters.

Figure 4 also shows an example of a contact lens 30 obtained with the method 100. In this embodiment, we find the first zone 15, the sub-zone 18 of the first zone and the second zone 16 as disclosed in the previous embodiment shown on figure 3. Thus, only the differences with the embodiment shown on figure 3 are described.

In this embodiment, the density or the number of micro-optical elements 13 of the first zone 15, respectively of the micro-optical elements 14 of the second zone 16, is further selected as the optical feature to be optimized in the step of determining 120, respectively the step of determining 130. The number of micro-optical elements of the first 14 and second 16 zones is for example comprised between 2 and 10000 micro-optical elements, for example between 4 to 100 micro-optical elements.

Especially, the density or the number of micro-optical elements, the dioptric power and the diameter are selected as optical feature to be determined in the steps of determining 120, 130.

Each step of determining 120, 130 is configured to first determine the density or the number of micro-optical elements 13, 14 of the given zone of the contact lens 10, then the value of the dioptric power of the micro-optical elements and finally the value of the diameter of the micro-optical elements. This configuration allows obtaining results more quickly.

In case of values of the density or number of micro-optical elements, the dioptric power and the diameter of the micro-optical elements do not allow reaching the criterion defined in the step of defining 120, 130, the computer selects other optical features, for example the position, the focal length, the geometry, the refractive, diffusive, or diffractive optical function of the micro-optical elements 13, 14. In that case, each step of determining is thus configured to determine the optical features for example in this order : the density or the number of micro-optical elements, the dioptric power or the focal length, the diameter (or size), the position, the geometry and the refractive, diffusive, or diffractive optical function of the micro-optical elements 13, 14. One can also determine only part of the optical features of the previous list, the other optical features being chosen to a predetermined value.

In the example illustrated by figure 4, the first zone 15 of the contact lens 30 obtained with the method 100 comprises six micro-optical elements 13. It means that the number of micro-optical elements 13 comprised in the first zone 15 of the final lens design is superior to the number of micro-optical elements 13 comprised in the first zone 15 of the preliminary lens optical design of the contact lens 10 shown on figure 3. The other optical features of the micro-optical elements 13 of the first zone 15 shown on figure 4 are similar to those obtained with the method 100 illustrated by figure 3.

At the end of the loop of the step of determining 130, each optical element 14 comprised in the second zone 16 is contiguous with other micro-optical elements 14 of the second zone 16. In other words, the micro-optical elements 14 of the second zone 16 are in contact with each other. Such a contiguous arrangement of the micro-optical elements provides a higher density of micro-optical elements 14 over the second zone 16 of the contact lens 30. For example, the density of contiguous micro-optical elements 16 comprised in the second zone 16 is greater than or equal to 60 percent, or advantageously 80 percent, in surface. In this example, the density of the micro-optical elements over the second zone 16 is 100 percent. It means that the micro-optical elements cover the whole area of the second zone 16.

In a preferred embodiment, as illustrated by figure 4, all the micro-optical elements 14 of the second zone 16 are identical. It means that all the micro-optical elements have the same optical features. For example, the micro-optical elements 14 of the second zone 16 illustrated on figure 4 are spherical microlenses and have each for example a diameter of 1 millimeter and a dioptric power of +4 diopters. The micro-optical elements 14 of the second zone 16 shown on figure 4 are diffractive micro-optical elements. On figure 4, the structure of the arrangement of the micro-optical elements has a circular pattern. Alternatively, the structure of the arrangement of micro-optical elements 14 may have a hexagonal pattern as shown on figure 5 or a rectangular pattern as shown on figure 6.

In this example, the micro-optical elements 13 positioned close to the outline 17 of the first zone 15 may touch the micro-optical elements 14 positioned close to the outline 17 of the first zone 15.

Figure 4 consequently shows that in the method 100, the number of micro-optical elements defined in the step of defining 110 may be modified in the steps of determining 120, 130, specifically in the steps of modifying 121, 131. For example, if only one micro-optical element 13 and/or 14 has been defined for the first zone 15 and/or the second zone 16, this number may increase in the iterative optimization process of the steps of determining 120, 130. In another example, if several micro-optical elements 13 and/or 14 have been defined for the first zone 15 and/or the second zone 16, the number of micro-optical elements may increase or decrease in the iterative optimization process of the steps of determining 120, 130.

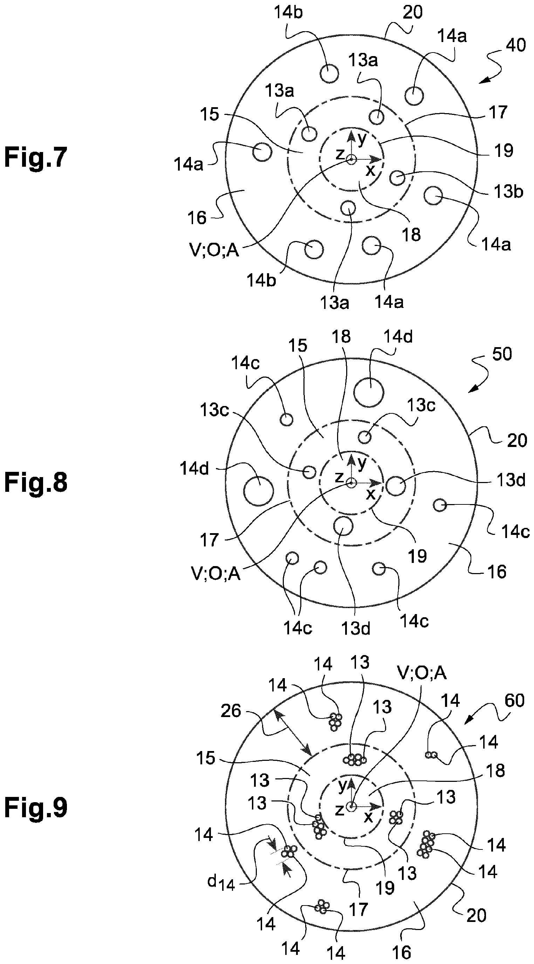

Figures 7, 8 and 9 illustrate examples of contact lenses 40, 50, 60 obtained with the method 100. In these embodiments, we find the first zone 15, the sub-zone 18 of the first zone 15 and the second zone 16 as disclosed in the previous embodiment shown on figure 3. Thus, only the differences with the embodiment shown on figure 3 are described.

On figure 7, the first zone 15 of the contact lens 50 comprises micro-optical elements 13 having the same size, the same optical function, the same focal length but having different dioptric powers. For example, the micro-optical elements numbered 13a have a dioptric power of 1 diopter, whereas the micro-optical elements numbered 13b have a dioptric power of 4 diopters. In addition, the second zone 16 of the contact lens 50 comprises micro-optical elements 14 having the same size, the same optical function, the same focal length but having different dioptric powers. For example, the micro-optical elements numbered 14a have a dioptric power of 1 diopter, whereas the micro-optical elements numbered 14b have a dioptric power of 4 diopters. It means that the micro-optical elements comprised in a same zone may have different dioptric powers. The steps of determining 120, 130 may thus be applied to specific micro-optical elements, which have been for example selected or defined by the computer in the step of defining 110. In addition, it also means that at the end of the step of determining, the micro-optical elements in a same zone may have different optical features.

Figure 8 shows another example of a contact lens 60. In this example, the first zone 15 of the contact lens 60 comprises micro-optical elements 13 having different sizes. For instance, on figure 8, the first zone 15 comprises two micro-optical elements numbered 13c having a diameter of 2 millimeters and two micro-optical elements numbered 13d having a diameter of 4 millimeters. In addition, the second zone 16 of the contact lens 60 comprises micro-optical elements 14 having different sizes. For example, the second zone 16 comprises two micro-optical elements 14c having a diameter of 2 millimeters and five micro-optical elements 14d having a diameter of 4 millimeters.

Figure 9 shows another example of a contact lens 60 in which the micro-optical elements of the zones are clustered. In the several clusters, the micro-optical elements are contiguous. For instance, the first zone 15 of the contact lens 60 comprises three different clusters having respectively four, five and six micro-optical elements 13. The second zone 16 of the contact lens 60 comprises five different clusters having respectively two, three, four, five and eight micro-optical elements 14.

In this embodiment, the second zone 16 of the contact lens 60 presents a width 26 (or a radial dimension) of the second zone 16 defined between the outline 17 and the outline 20 of the contact lens 60. The width 26 of the second zone 16 is higher than the diameter d₁₄ of the micro-optical elements 14 of the second zone 16. Generally, the width 26 of the second zone 16 is comprised between the diameter of the micro-optical elements and two times the diameter of the micro-optical elements.

Although the figures 7-9 show only contact lens having two zones, these examples are also adapted to a contact lens 10 having more than two zones.

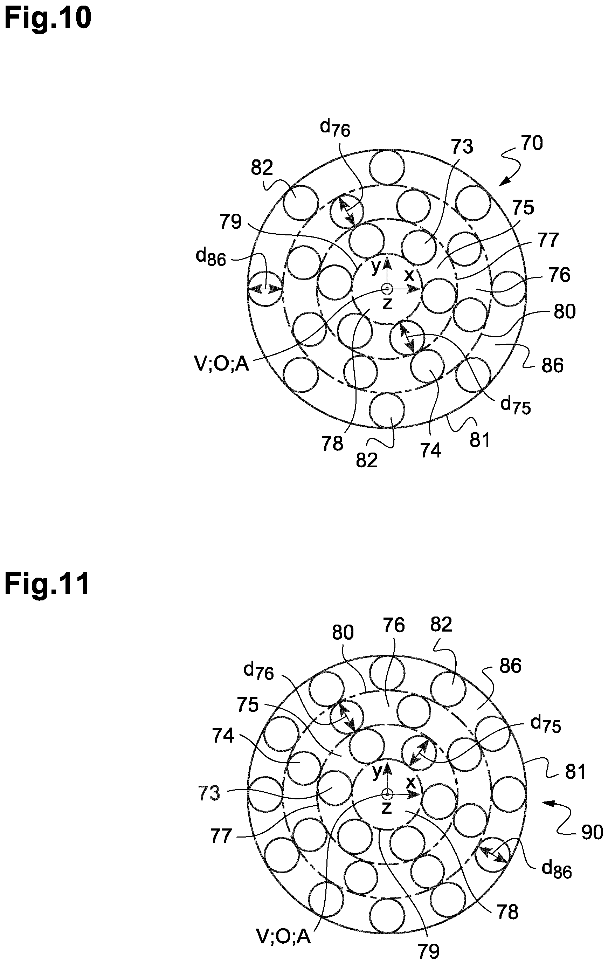

Figure 13 shows a second example of a method 200 according to the present disclosure. The method 200 is a method 200 for designing a contact lens 70, 90 as shown on figures 10 and 11. The contact lens 70, 90 is preferably a corrective lens 70, 90.

In another embodiment as illustrated by figures 10 and 11, the contact lens 70 comprises at least three zones in which the micro-optical elements are arranged specifically, the micro-optical elements being arranged differently from one zone to another. Each of the zones of the contact lens comprises an arrangement of several micro-optical elements.

Defining a first, second and third zones allow considering more variations of the size of the pupil of the eye of the wearer, for example compared to the method 100. Consequently, the method 200 is improved because the contact lens provided at the end of the method 200 has an optical lens design that takes more into account the variation of the pupil diameter. The method 200 provides a corrective contact lens 10 with a better tradeoff between visual acuity and visual discomfort due to myopia evolution control compared to the method 100.

The method 200 illustrated by figure 13 comprises all the steps of the method 100 of figure 12. Thus, only the differences with the figure 12 are described.

In a non-limitative example illustrated by figure 10, the contact lens 70 is divided in three zones: a central disk-shaped first zone 75, an annular-disk-shaped second zone 76 and annular-disk-shaped second zone 86. The first zone 75 comprises micro-optical elements 73 having at least one optical feature, the second zone 76 comprises micro-optical elements 74 having at least one optical feature and the third zone 86 comprises micro-optical elements 82 having at least one optical feature.

The optical feature of the micro-optical elements 82 of the third zone 86 comprises at least one of the following optical features: dioptric power; geometry; refractive, diffractive or diffusive optical function; focal length; diameter or size; position.

The first zone 75 is bounded by a circular outline 77 and comprises at least one sub-zone 78 bounded by a circular outline 79. This sub-zone 78 lacks micro-optical element and covers at least 10 percent of the first zone 75. For example, the sub-zone 78 has a diameter of 2 millimeters and is centered on the ophthalmic lens optical vertex V of the contact lens 70. Such feature allows preserving the visual acuity of the wearer.

The first zone 75, the second zone 76 and the third zone 86 are concentric. They are centered on the vertex V of the preliminary lens optical design of the contact lens 70. The second zone 76 surrounds the first zone 75 and is bounded internally by the circular outline 77 and externally by a circular outer outline which coincides with a circular inner outline 80 of the third zone 86. The third zone 86 surrounds the second zone 75 and is bounded internally by the circular outline 80 and externally by a circular outer outline which coincides with the outer edge 81 of the contact lens 70.

The outer circular outline 77 of the first zone 75 is of 4 millimeters of diameter. The inner circular outline of the second zone 76 presents a diameter of 4 millimeters.

The outer circular outline of the second zone 76 presents a diameter between 6,00 millimeters and 8 millimeters. Preferably, the inner circular outline 80 of the third zone 86 presents a diameter between 6,00 millimeters and 8 millimeters and the external outline (i.e. the outer edge 81) of the third zone 86 presents a diameter between 8 millimeters and 10 millimeters.

The outer circular outline of the second zone is of 6 millimeters in diameter, the inner outline of the third zone 86 is of 6 millimeters in diameter and the outer edge 81 is of 10 millimeters in diameter.

The second zone 76 has a width defined with its inner and outer outlines that depends on the size of the micro-optical elements 74, specifically from the largest micro-optical element 74 of the second zone 76. Similarly, the third zone 86 has a width defined with its inner and outer outlines that depends on the size of the micro-optical elements 82, specifically from the largest micro-optical element 82 of the third zone 86. It is thus an easy means to define automatically the size of the second and third zones in the step of defining 110.

The contact lens 70 has a first area, a second area and third area. The first area is comprised in the first zone 75 and comprises a part or all of the micro-optical elements 73 of the first zone (in this example, all the micro-optical elements 73 of the first zone 75). In this example, the first area of the contact lens 70 is bounded by an outer outline which coincides here with the outline 77 bounding the first zone 75. It means that the first area also comprises the sub-zone 78 which is free of micro-optical elements. The second area is comprised in a union of the first zone 75 and of the second zone 76 and comprises a part or all of the micro-optical-elements 74 of the second zone 76 (here all the micro-optical elements 74 of the second zone 76). The second area of the contact lens 70 also comprises the micro-optical elements 73 of the first zone 75. The third area is comprised in a union of the first zone 75, of the second zone 76 and the third zone 86 and comprises a part or all of the micro-optical-elements 82 of the third zone 86 (here all the micro-optical elements 82 of the third zone 86). The third area of the contact lens 70 also comprises the micro-optical elements 73 of the first zone 75 and the micro-optical element 74 of the second zone 76. It means that the third area of the contact lens 70 overlaps the first zone 75, the second zone 76 and the third zone 86. In this example, the third area comprises the whole contact lens 70.

The micro-optical elements 73, 74 of the first 75 and second 76 zones have the same optical features as those of the micro-optical elements 14, 13 explained above for the method 100.

The micro-optical elements 82 of the third zone 86 have a size d₈₆ (i.e. diameter) which, when projected into the facial plane (perpendicular to the main axis of the contact lens 70), is fixed between 0,3 millimeter to 2 millimeters.

The micro-optical elements 82 of the third zone 86 are configured to have a spherical power between 1 diopter to 20 diopters, for example between 1 diopter to 10 diopters.

The micro-optical elements 82 of the third zone 86 are defined to have a surface shape, for example a prismatic or spherical or aspherical or toroidal surface shape.

Each refractive micro-optical element 82 can be a monofocal or a bifocal micro-optical element. Each diffractive micro-optical element 82 comprises for example a diffractive Pi-Fresnel micro-lens. As an alternative, each diffractive micro-optical element 82 comprises a diffusive micro-optical element scattering light.

In the step of defining 110 of method 200, where the size of the first, second and third zones are defined, the first zone 75 comprises six micro-optical elements 73, the second zone 76 comprises eight micro-optical elements 74 and the third zone 86 comprises eight micro-optical elements 82.

The optical features of all the micro-optical elements 73, 74, 82 of the first 75, second 76, and third 86 zones have the same values.

In the step of defining 110, the micro-optical elements 73 of the first zone 75 are refractive micro-lenses having a diameter of 1 millimeter, a dioptric power of 4 dioptrics, a focal length of 1000 millimeters, and the micro-optical elements 74 of the second zone 76 are refractive micro-lenses having a diameter of 1 millimeter, a dioptric power of 4 diopters, a focal length of 1000 millimeters. The micro-optical elements 82 of the third zone 86 are refractive micro-lenses having of 1 millimeter, a dioptric power of 4 diopters, a focal length of 1000 millimeters.

In a non-limitative embodiment, the micro-optical elements 73 of the first zone 75 have optical features adapted to provide a first myopia control function of the wearer's myopia and the micro-optical elements 74 of the second zone 76 have optical features adapted to provide a second myopia control function of the wearer's myopia. The micro-optical elements 82 of the third zone 86 defined in the step of defining 110 have optical features to provide a third myopia control function of the myopia for the eye of the wearer. In other words, the micro-optical elements 82 of the third zone 86 have optical features adapted to provide a specific spatial distribution of blur. Thus, the micro-optical elements of the third zone 86 have optical features to provide a third defocus spatial function.

The third myopia control function of myopia may be similar to the first and second myopia control functions of myopia. In another embodiment, the third myopia control function of myopia differs from the first and second myopia control functions of myopia.

The first myopia control function depends on the optical features of the micro-optical elements 73 comprised in the first zone 75, the second myopia control function depends on the optical features of the micro-optical elements 74 comprised in the second zone 76 and the third myopia control function depends on the optical features of the micro-optical elements 82 comprised in the third zone 86.

As the micro-optical elements of the contact lens 70 have the same optical features, the first, second and third optical functions obtained with the preliminary design are similar.

In an embodiment, the micro-optical elements 73, 74 and 82 comprise microlenses providing a refractive power. The refractive power of the micro-optical elements 73, 74, 82 (microlenses) of the first 75, second 76, and third 86 zones differs from the refractive power of the macro-optical component of the contact lens 70. In other embodiments, the micro-optical elements 73, 74, and 82 may provide a diffractive or diffusive micro-optical function as explained above.

After defining the preliminary lens optical design of the contact lens 70, the method 200 carries out the steps of determining 120, 130 as explained on figure 12.

In the example shown on figure 10, only the diameter and the dioptric power of the micro-optical elements 73, 74, 82 are determined in the steps of determining 120, 130.

The method 200 further comprises for the third zone 86 of the contact lens 70, a step of determining 210 a value of the diameter and the dioptric power of the micro-optical elements 82 superimposed on the contact lens 70. As for the method 100, the step of determining 210 takes into account the optical features of the micro-optical elements determined in the previous steps of determining 120, 130.

To this effect, a third optical function of the contact lens 70 is calculated throughout the third area of the contact lens 70.

Figure 14 illustrates an example of the first, second and third target optical functions. In this example, the first, second and third target optical functions are similar. Thus, in this example, the first, second and third target optical functions are called target optical functions 1000.In the present disclosure, all the modulation transfer functions can be obtained over the visible spectrum, for example over wavelengths comprised between 400-800 nm or 400-780 nm. Advantageously, all the modulation transfer functions are calculated for a central wavelength between 540 to 560 nm, for example at 550 nm.

The modulation transfer function shown on figure 14 is preferably calculated with an aperture of 4 millimeters and at a wavelength of 550 nm. Here the aperture is centered on the optical center V of the contact lens (optical design of the contact lens).

In the present disclosure, the aperture corresponds to a virtual diaphragm positioned on the contact lens (i.e. on the preliminary lens optical design of the contact lens). The use of an aperture allows easily simulating the effect of the pupil of the eye, for example when the pupil of the eye of the wearer decreases when the wearer performs an activity in a luminous environment (for example for outdoor activities) and when the pupil of the eye of the wearer grown when the wearer performs an activity in a low-light environment (for example for indoor activities). According to this embodiment, the target optical function shown on figure 14 presents values higher than or equal to 0.95, 0.90, 0.85, 0.80, 0.75, 0.70, 0.75, 0.60 over the range of spatial frequencies comprised between 0 and 5 cycles per degree. In addition, the target optical function has values higher than or equal to 0.40, 0.35, 0.30 over the range of spatial frequencies comprised between 10 and 20 cycles per degree. Then, the target optical function has values higher than or equal to 0.20 over the range of spatial frequencies comprised between 20 and 30 cycles per degree. Preferably, the target optical function has values higher than or equal to 0.30, 0.28, 0.26, 0.24, 0.22, 0.20 over the range of spatial frequencies comprised between 20 and 30 cycles per degree.

Then, in the step of determining 210, the third optical function is then compared with the target optical function shown on figure 14 (in a third comparison).

In the method 200, the step of determining 210 the value of the selected optical features of the micro-optical elements 82 of third zone 86 comprises an iterative optimization process comprising the following steps:
- modifying 211 the optical features of the micro-optical elements 82,
- checking 212 if the third comparison satisfies a criterion,
- if the criterion is not satisfied, reiterating modifying 211 and checking 212.

The implementation of the iterative optimization process of the step of determining 210 is similar to the iterative optimization process of the steps of determining 120, 130 shown on figure 12. For instance, the diameter and the dioptric power of the micro-optical elements of a same zone are determined simultaneously. It means that, the steps of determining are configurated to change at each iteration, the value of the diameter and the dioptric power of the micro-optical elements belonging to a same zone.

As explained above, the step of determining 210 comprises a step of defining the criterion. The criterion may be a minimum of a quadratic deviation between the third optical function and the third target function and/or, or a minimum of a specific cost function, a value or a range of values of the third target optical function etc. In addition, a number of iterations is also defined.

In the step of modifying 210, the value of the optical features defined in the step of defining 110 is changed with another value of the at least one optical feature.

For instance, the diameter d₈₆ of the micro-optical elements 82 of the third zone 13 is selected between 0,3 millimeter to 2 millimeters. The micro-optical elements 82 of the third zone 86 are defined to have a spherical power between 1 diopter to 20 diopters for example between 1 to 10 diopters.

In another embodiment, the refractive, diffractive or diffusive optical function, and/or the focal length, the position of the micro-optical elements 82 of the third zone 86 defined in the step of defining 110 are/is changed in the step of modifying 211. In addition, the surface shape of the micro-optical elements may be changed into a spherical, or aspherical, or toroidal surface shape. The refractive optical function may be for example changed into a diffractive optical function or inversely. As explained above, as the contact lens 70 comprises several micro-optical elements 73, 74, 82 in each zone, the density or the number of micro-optical elements is an optical feature that can be optimized in the steps of determining 210. The density is selected such that the micro-optical elements 82 cover 20 to 80 percent of the third zone 86. In another example, at the end of the loop of the step of determining 210, the third zone 86 may comprise a specific number of micro-optical elements 82. The specific number of micro-optical elements 82 may be for example comprised between 2 and 10000 (for example between 4 to 100) micro-optical elements.

Each micro-optical element of the third zone 86 is spaced from the adjacent micro-optical elements 86 by at least 0,5 millimeter. For example, the edge of one of optical element 1 comprised in the third zone 86 is spaced from the edge of an adjacent optical element 1 by 1 millimeter.

When the iteration process is ended, the method 200 comprises the step of providing 140 the final lens design of the contact lens 70.

Figure 10 shows an example of a final lens design of the contact lens 70. In this example, the first zone 75 comprises six micro-optical elements having a size noted d₇₅, the second zone 76 comprises eight micro-optical elements having a size noted d₇₆, and the third zone 86 comprises eight micro-optical elements having a size noted d₈₆. All the micro-optical elements 73, 74, 82 have the same size and present a diameter of 2 millimeters. In addition, all micro-optical elements 73, 74, 86 (diffusive microlenses) of the contact lens 70 have the same dioptric power of 4 diopters. The other optical features (geometry, optical function, focal length, position) do not change between the preliminary lens optical design and the final lens optical design.

Figure 11 also shows an example of a contact lens 90 obtained with the method 100. In this embodiment, we find the first zone 75, the sub-zone 78 of the first zone, the second zone 76 and the third zone 86 as disclosed in the previous embodiment shown on figure 10. Thus, only the differences with the embodiment shown on figure 10 are described.

Figure 11 illustrates an example in which the density or the number of micro-optical elements of the third zone 86 is determined in the step of determining 210 in addition to the diameter and the dioptric power. In this example, the first zone 75 comprises six micro-optical elements having a size noted d₇₅, the second zone 76 comprises eight micro-optical elements having a size noted d₇₆, and the third zone 86 comprises twelve micro-optical elements having a size noted d₈₆. The micro-optical elements of the first 75, second 76 and third zones 86 are diffractive microlenses. In this example, the micro-optical elements of the first 75, second 76 and third 86 zones have a same size. For example, the micro-optical elements of the first zone 75 have a diameter of 1 millimeter and the micro-optical elements of the second zone 76 have a diameter of 1 millimeter and the micro-optical elements of the third zone 86 have a diameter of 1 millimeter. All the micro-optical elements of the contact lens 10 have a same dioptric power, for example of 4 diopters.

Figure 15 shows an example of the first optical function 1001, the second optical function 1002 and the third optical function 1003, computed (separately) in the steps of determining 120, 130, 140. The first optical function 1001, the second optical function 1002 and the third optical function 1003 are those obtained with the final lens optical design of the corrective lens 90 shown on figure 11.

Figure 15 illustrates an example in which in the steps of determining 120, 130 and 210, the first, second and third optical functions 1001, 1002, 1003 are calculated for spatial frequencies within a predetermined range, for example over the range of spatial frequencies comprised between 0 and 30 cycles per degree. Specifically, the first, second and third optical functions 1001, 1002, 1003 are calculated for each spatial frequencies comprised between 0 and 5 cycles per degree and comprised between 10 and 30 cycles per degree and comprised between 20 and 30 cycles per degree.

Generally, the different ranges of spatial frequencies (0 to 5 cycles per degree and 10 to 30 cycles per degree) correspond to different impact of the modulation transfer function. The range of spatial frequencies comprised between 0 to 5 cycles per degree corresponds to the control of the myopia and the range of spatial frequencies comprised between 10 to 30 corresponds to the visual acuity. The modulation transfer functions illustrated on figure 15 are calculated with a circular aperture having a size (i.e. diameter) comprised between 3 and 10 millimeters and centered on the optical center or vertex V of the contact lens 90. In the following examples, the aperture relates to or is defined as a specific portion of the contact lens 90. It means that an aperture having 4 mm in diameter corresponds to a circular portion of 4 mm diameter defined on the contact lens 90. The diameter of the aperture defines the portion of the contact lens 90 through which the light travels for the computation of the modulation transfer function. According to the present disclosure, the specific portion of the contact lens 90 can be defined over the whole area of the contact lens 90.

The first optical function 1001 shown on figure 15 is calculated with an aperture of 4 millimeters and at a wavelength of 550 nm. The second optical function 1002 shown on figure 15 is calculated with an aperture of 6 millimeters and at a wavelength of 550 nm. The third optical function 1003 shown on figure 15 is calculated with an aperture of 8 millimeters and at a wavelength of 550 nm.

According to this embodiment, the first, second and third optical functions 1001, 1002, 1003 shown on figure 15 all present values higher than or equal to 0.95, 0.90, 0.85, 0.80, 0.75, 0.70, 0.75, 0.60 over the range of spatial frequencies comprised between 0 and 5 cycles per degree. In this embodiment, the first, second and third optical functions 1001, 1002, 1003 are similar over the range of spatial frequencies comprised between 0 and 5 cycles per degree. In another embodiment, the differences between the values of the first, second and third optical functions are not larger than 5 percent over the range of spatial frequencies comprised between 1 and 5 cycles per degree or between 1 and 3 cycles per degree.

The first optical function 1001 has values higher than or equal to 0.40, 0.35, 0.30 over the range of spatial frequencies comprised between 10 and 20 cycles per degree. Then, the first optical function 1001 has values higher than or equal to 0.20 over the range of spatial frequencies comprised between 20 and 30 cycles per degree. Preferably, the first optical function 1001 has values higher than or equal to 0.30, 0.28, 0.26, 0.24, 0.22, 0.20 over the range of spatial frequencies comprised between 20 and 30 cycles per degree.

The second optical function 1002 has values higher than or equal to 0.39, 0.38, 0.35, 0.30, 0.28 over the range of spatial frequencies comprised between 10 and 20 cycles per degree. Then, the second optical function 1002 has values higher than or equal to 0.15 over the range of spatial frequencies comprised between 20 and 30 cycles per degree. Preferably, the second optical function 1002 has values higher than or equal to 0.28, 0.26, 0.24, 0.22, 0.20 over the range of spatial frequencies comprised between 20 and 30 cycles per degree.

The third optical function 1003 has values higher than or equal to 0.39, 0.38, 0.35, 0.30, 0.28, 0.25 over the range of spatial frequencies comprised between 10 and 20 cycles per degree. Then, the third optical function 1003 has values higher than or equal to 0.15 over the range of spatial frequencies comprised between 20 and 30 cycles per degree. Preferably, the third optical function 1003 has values higher than or equal to 0.28, 0.26, 0.24, 0.22, 0.20 over the range of spatial frequencies comprised between 20 and 30 cycles per degree.

In this example, the second optical function 1002 presents values over the range of spatial frequencies comprised between 10 and 20 cycles per degree, which are higher than the values of the third optical function 1003 over the range of spatial frequencies comprised between 10 and 20 cycles per degree, said values of the second optical function 1002 and said values of the third optical function 1003 being compared with similar spatial frequencies. The differences between the values of the second optical function 1002 and the values of the third optical function 1003 are not larger than 10 percent over the range of spatial frequencies comprised between 10 and 20 cycles per degree.

In addition, the first optical function 1001 presents values over the range of spatial frequencies comprised between 10 and 20 cycles per degree, which are higher than the values of the second optical function 1002 over the range of spatial frequencies comprised between 10 and 20 cycles per degree, said values of the first optical function 1001 and said values of the second optical function 1002 being compared with similar spatial frequencies. For example, the differences between the values of the first optical function 1001 and the values of the second optical function 1002 are not larger than 10 percent over the range of spatial frequencies comprised between 10 and 20 cycles per degree.

In this example, the second optical function 1002 presents values over the range of spatial frequencies comprised between 20 and 30 cycles per degree, which are higher than the values of the third optical function 1003 over the range of spatial frequencies comprised between 20 and 30 cycles per degree, said values of the second optical function 1002 and said values of the third optical function being compared with similar spatial frequencies. The differences between the values of the second optical function 1002 and the values of the third optical function 1003 are not larger than 10 percent over the range of spatial frequencies comprised between 20 and 30 cycles per degree.

In addition, the first optical function 1001 presents values over the range of spatial frequencies comprised between 20 and 30 cycles per degree, which are higher than the values of the second optical function over the range of spatial frequencies comprised between 10 and 20 cycles per degree, said values of the first optical function 1001 and said values of the second optical function being compared with similar spatial frequencies. The differences between the values of the first optical function 1001 and the values of the second optical function 1002 are not larger than 10 percent over the range of spatial frequencies comprised between 20 and 30 cycles per degree.

Although that the first, the second and the third optical functions have values presenting differences lower than or equal to 10 percent over the range of spatial frequencies comprised between 10 and 30 cycles per degree, these optical functions are closed to the target optical function shown on figure 14 over the same range of spatial frequencies. Specifically, in this example, the differences between the first, second and third optical functions and the target optical function of figure 14 are lower than 10 percent, preferably lower than 5 percent, over the range of spatial frequencies comprised between 10 and 30 cycles per degree. preferably between 10 and 20 cycles per degree and/or between 20 and 30 cycles per degree. In addition, the differences between the first, second and third optical functions and the target optical function of figure 14 are lower than 5 percent over the range of spatial frequencies comprised between 0 and 10 cycles per degree, preferably between 0 and 5 cycles per degree and/or between 3 and 5 cycles per degree and/or between 5 and 10 cycles per degree.

Thus, at the end of the step of determining 210, the differences between the values of the first, second and third optical functions are lower than or equal to 5 percent over the range of the spatial frequencies comprised between 0 and 5 cycles per degree and the differences between the values of the first, second and third optical functions are lower than or equal to 10 percent over the range of the spatial frequencies comprised between 10 and 30 cycles per degree, preferably between 10 and 20 cycles per degree and/or between 20 and 30 cycles per degree. It means that the final lens optical design of the contact lens 10 is well adapted to the variations of the light environment because the final lens design provides a modulation transfer function nearly equivalent (with a tolerance of 10 percent) when the pupil of the eye of the wearer is of 4 mm, 6 mm and 8 mm in diameter.

Referring to figures 10, 11 and 16, it will be described an example of the optical features of micro-optical elements comprised in the third zone 86 selected at the end of the loop of the step of determining 210.

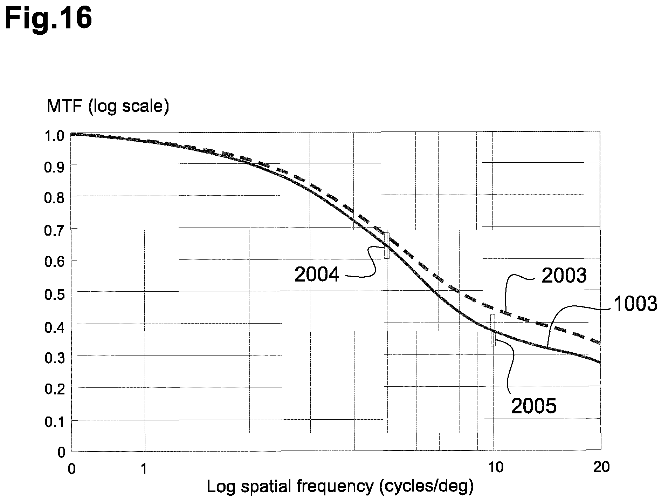

Figure 16 illustrates the third optical function 1003 calculated over the third area of the contact lens 90 shown on figures 11 and another third optical function 2003 calculated over the third area of the contact lens 70 shown on figures 10. The third target optical function 2003 is calculated similarly than the third target optical function 1003 as explained above. In addition, figure 16 shows an example of a third target optical function illustrated via value intervals numbered 2004, 2005 defined for specific ranges of spatial frequencies.

The value interval 2004 defines values of the third target optical function comprised between 0,60 and 0,67 at the spatial frequency of 5 cycles per degree and the value interval 2005 defines values of the third target optical function comprised between 0,35 and 0,45 at the spatial frequency of 10 cycles per degree. The value intervals 2004, 2005 are each an example of the criterion used in the step of determining 210.

In the example of figure 16, the third optical function numbered 2003 has:
- a value equal to 0.67 at the spatial frequency of 5 cycles per degree, and
- a value equal to 0.45 at the spatial frequency of 10 cycles per degree.

Thus, the value of the third target optical function 2003 at the spatial frequency of 5 cycles per degree is inside of the value interval 2004 of the third target optical function and that the value of the third target optical function 2003 at the spatial frequency of 10 cycles per degree is outside the value interval 2005 of the third target optical function. Consequently, the value of the third optical function 2003 at the spatial frequency of 10 cycles per degree does not satisfy the criterion of the step of determining 210 although that the third optical function 2003 show a better optical property.

It means that the optical lens design shown on figure 10 cannot be selected at the end of the iteration process of the step of determining 210 having the criterion defined like those illustrated on figure 16.

The third optical function 1003 has:
- a value equal to 0.63 at the spatial frequency of 5 cycles per degree, and
- a value equal to 0.37 at the spatial frequency of 10 cycles per degree.

It means that the value of the third target optical function 1003 at the spatial frequency of 5 cycles per degree is comprised in the value interval 2004 of the third target optical function and that the value of the third target optical function 1003 at spatial frequency of 10 cycles per degree is comprised in the value interval 2005 of the third target optical function. Consequently, the values of the third optical function 1003 at the spatial frequencies of 5 and 10 cycles per degree satisfy the criterion of the step of determining 210. The optical design shown on figure 11 may be selected at the end of the iteration process of the step of determining 210 having the criterion defined like those illustrated on figure 16. The lens design shown on figure 11 becomes the final optical lens design of the contact lens. The contact lens is then manufactured according to this final design.

## Claims

1. Computer-implemented method for designing a contact lens, the computer-implemented method comprising:
- for a first zone of the contact lens, determining a value of at least one optical feature of at least one micro-optical element superimposed on the contact lens in the first zone, based on a first comparison, the first comparison being between a first optical function representative of the optical quality of the contact lens calculated throughout a first area of the contact lens and a first target optical function, the first area being comprised in the first zone and comprising the at least one micro-optical element of the first zone,
- for a second zone of the contact lens, determining a value of at least one optical feature of at least one micro-optical element superimposed on the contact lens in the second zone, based on a second comparison, the second comparison being between a second optical function representative of the optical quality of the contact lens calculated throughout a second area of the contact lens and a second target optical function, the second area being comprised in a union of the first zone and the second zone and comprising the at least one micro-optical-element of the second zone.

2. Method according to claim 1, wherein the second zone is arranged around the first zone.

3. Method according to anyone of claims 1 and 2, wherein, determining the value of the at least one optical feature of the at least one micro-optical element of the first zone is carried out before determining the value of the at least one optical feature of the at least one micro-optical element of the second zone.

4. Method according to claim 3, comprising:
- for a third zone of the contact lens arranged annularly to surround the second zone, determining a value of at least one optical feature of at least one micro-optical element superimposed on the contact lens in the third zone based on a third comparison, the third comparison being between a third optical function of the contact lens calculated throughout a third area of the contact lens and a third target optical function, the third area being comprised in a union of the first, second and third zones and comprising the at least one micro-optical element of the third zone.

5. Method according to claim 4, wherein, determining the value of the at least one optical feature of the at least one micro-optical element of the third zone is carried out after determining the value of the at least one optical feature of the at least one micro-optical element of the second zone.

6. Method according to anyone of claims 4 to 5, wherein the first zone of the contact lens, the second zone of the contact lens and the third zone of the contact lens are concentric.

7. Method according to anyone of claims 1 to 6, wherein at least one of the first optical function, the second optical function, the first target optical function and the second target optical function is based on a Modulation Transfer Function or a Point Spread Function.

8. Method according to anyone of claims 1 to 7, wherein the first target optical function and the second target optical function are identical.

9. Method according to anyone of claims 1 to 8, wherein the first target optical function and the second target optical function are different.

10. Method according to anyone of claims 1 to 9, wherein at least one of the first optical function and the second optical function is calculated for spatial frequencies comprised between 1 and 5 cycles per degree, and/or between 5 and 20 cycles per degree and/or between 20 and 30 cycles per degree.

11. Method according to anyone of claims 1 to 10, wherein the at least one optical feature of the at least one micro-optical element of the first zone and the at least one optical feature of the at least one micro-optical element of the second zone comprise at least one of the following:
- a dioptric power;
- a geometry;
- a refractive, a diffractive or a diffusive optical function;
- a focal length;
- a diameter;
- a position.

12. Method according to claim 11, wherein, the at least one micro-optical element of the first zone having a circular contour, a diameter of the at least one micro-optical element of the first zone is between 0,3 millimeter to 2 millimeters and/or, the at least one micro-optical element of the second zone having a circular contour, a diameter of the at least one micro-optical element of the second zone is between 0,3 millimeter to 2 millimeters.

13. Method according to anyone of claims 11 and 12, wherein a dioptric power of the at least one micro-optical element of the first zone is between 1 diopter to 10 diopters and/or a dioptric power of the at least one micro-optical element of the second zone is between 1 diopter to 10.

14. Method according to any one of claims 1 to 13, wherein the first zone comprises a plurality of micro-optical elements and the at least one optical feature of the first zone comprises a density of the micro-optical elements over the first zone or a number of the micro-optical elements in the first zone and/or,
the second zone comprises a plurality of micro-optical elements and the at least one optical feature of the first zone comprises a density of the micro-optical elements over the second zone or a number of the micro-optical elements in the second zone.

15. Method for manufacturing a contact lens comprising:
- a step of determining a design of the contact lens using the computer-implemented method according to any one of claims 1 to 14,
- a step of manufacturing the contact lens based on the design.
